# EUROPÄISCHE PATENTSCHRIFT

(11) **EP 0 726 297 B1**
(45) Veröffentlichungstag und Bekanntmachung des Hinweises auf die Patenterteilung: **01.08.2001**
(21) Anmeldenummer: 96810068.5
(22) Anmeldetag: 01.02.1996
(51) Int. Cl.: C09B 67/22, D06P 1/39, C09B 29/00

(54) **Farbstoffmischungen und ihre Verwendung**
Dye mixtures and their use
Mélanges de colorants et leur utilisation

(30) Priorität: 10.02.1995 CH 40795
(43) Veröffentlichungstag der Anmeldung: 14.08.1996
(73) Patentinhaber: Ciba Specialty Chemicals Holding Inc., 4057 Basel (CH)
(72) Erfinder: Adam, Jean-Marie, Dr., F-68300 Rosenau (FR); Sutter, Peter, CH-4132 Muttenz (CH); Casi, Francine, F-68440 Eschentzwiller (FR)

(56) Entgegenhaltungen:
- EP-A- 0 092 512
- EP-A- 0 181 292
- EP-A- 0 387 201
- EP-A- 0 593 392
- DE-A- 1 644 121
- FR-E- 49 639

## Beschreibung

Die vorliegende Erfindung betrifft Mischungen von Azofarbstoffen, die insbesondere zum Färben oder Bedrucken von natürlichen oder synthetischen Polyamidfasermaterialien geeignet sind und dabei Färbungen oder Drucke mit guten Allgemeinechtheiten ergeben.

Aus der EP-A-0 092 512 ist ein Verfahren zum Trichromiefärben bekannt bei welchem Farbstoffgemische enthaltend u.A. einen Azofarbstoff und einen oder mehrere Disazofarbstoffe welche drei Phenylreste enthalten, verwendet werden.

EP-A-0 387 201 offenbart Farbstoffmischungen aus spezifisch substituierten monomeren Anthrachinonverbindungen und deren Verwendung zum Färben von natürlichen und synthetischen Polyamidmaterialien.

Gegenstand der vorliegenden Erfindung sind somit Farbstoffgemische bestehend aus
(a) 0-100 Gew.-% mindestens einer Farbstoffmischung enthaltend eine Verbindung der Formel 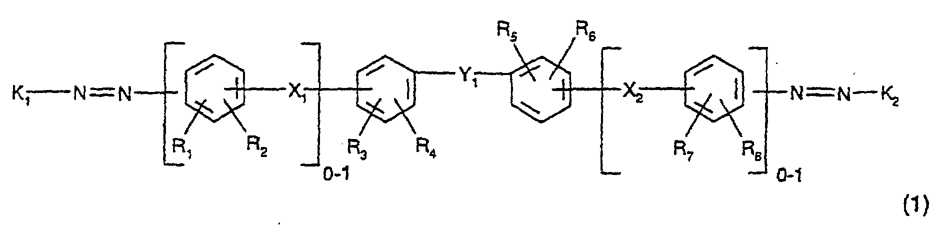 worin K₁ und K₂ unabhängig voneinander je den Rest einer Kupplungskomponente der Benzol- oder Naphthalinreihe oder der heterocyclischen Reihe bedeuten,
   X₁ und X₂ unabhängig voneinander je ein Brückenglied der Formel -SO₂-O-,
   -SO₂-N(R₉)-, -COO- oder -CO-N(R₁₀)- sind, wobei R₉ und R₁₀ unabhängig voneinander je Wasserstoff oder C₁-C₄-Alkyl bedeuten,
   R₁, R₂, R₃, R₄, R₅, R₆, R₇ und R₈ unabhängig voneinander je für Wasserstoff, C₁-C₆-Alkyl, C₁-C₄-Alkoxy, Halogen, Sulfo, unsubstituiertes oder durch Halogen substituiertes C₂-C₄-Alkanoylamino oder eine unsubstituierte oder durch Halogen substituierte Gruppe -NHCO-C₂-C₄-Alkylen stehen, und
   Y₁ eine direkte Bindung, geradkettiges oder verzweigtes C₁-C₆-Alkylen oder C₅-C₈-Cycloalkylen bedeutet, und eine Verbindung der Formel 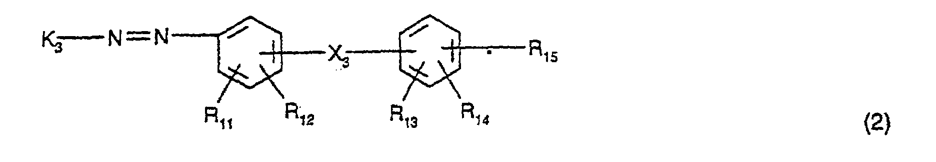 worin K₃ unabhängig die zuvor für K₁ angegebene Bedeutung hat, X₃ unabhängig die zuvor für X₁ angegebene Bedeutung hat, R₁₁, R₁₂, R₁₃ und R₁₄ unabhängig voneinander je die zuvor für R₁ angegebene Bedeutung haben und R₁₅ C₁-C₁₂-Alkyl, C₅-C₈-Cycloalkyl oder Halogen ist, und
(b) 0-100 Gew.-% mindestens einer Farbstoffmischung enthaltend eine Verbindung der Formel 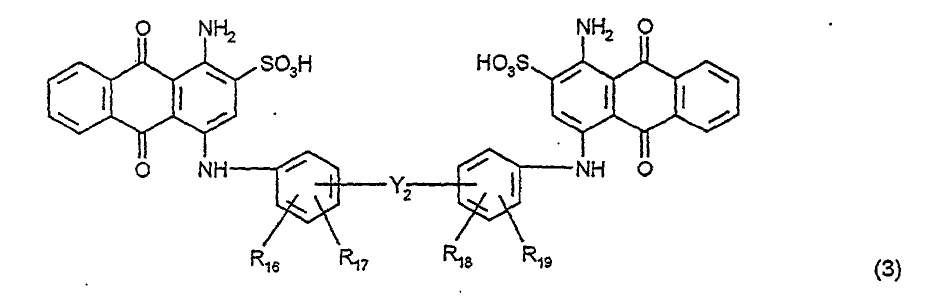 worin R₁₆, R₁₇, R₁₈ und R₁₉ unabhängig voneinander je für Wasserstoff, C₁-C₆-Alkyl, C₁-C₄-Alkoxy, Halogen, unsubstituiertes oder durch Halogen substituiertes C₂-C₄-Alkanoylamino oder eine unsubstituierte oder durch Halogen substituierte Gruppe -NHCO-C₂-C₄-Alkylen stehen und Y₂ eine direkte Bindung, geradkettiges oder verzweigtes C₁-C₆-Alkylen oder C₅-C₈-Cycloalkylen bedeutet,
   und eine Verbindung der Formel 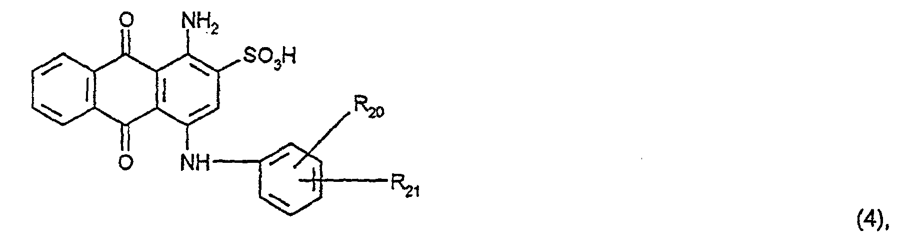 worin R₂₀ die zuvor für R₁₆ angegebene Bedeutung hat und R₂₁ C₁-C₁₂-Alkyl, C₅-C₈-Cycloalkyl, C₂-C₄-Alkanoylamino oder Benzoylamino ist, mit der Massgabe, dass die Summe von (a) und (b) 100 Gew.-% beträgt

Die den Verbindungen der Formel (1) und (2) zugrunde liegenden Kupplungskomponenten K₁-H, K₂-H und K₃-H sind an sich bekannt und in grosser Zahl beschrieben z.B. in Venkataraman "The Chemistry of Synthetic Dyes" Band 6, Seiten 213-297, Academic Press, New York, London 1972.

K₁, K₂ und K₃ stehen unabhängig voneinander je bevorzugt für den Rest einer Benzol-, Naphthalin-, Pyrazolon-, Aminopyrazol-, Pyridon-, Pyrimidin-, Indol-, Naphthylimidazol-, Diphenylamin-, Pyrazolo[2,3-a]pyrimidin-, Tetrahydrochinolin- oder Acetessigsäureamid-Kupplungskomponente, wobei die genannten Reste weitersubstituiert sein können.

Geeignete Substituenten am Rest K₁, K₂ oder K₃ sind z.B.: C₁-C₆-Alkyl, worunter generell Methyl, Ethyl, n- oder iso-Propyl, n-, iso-, sec.- oder tert.-Butyl oder geradkettiges oder verzweigtes Pentyl oder Hexyl zu verstehen ist; C₁-C₄-Alkoxy, worunter generell Methoxy, Ethoxy, n- oder iso-Propoxy oder n-, iso-, sec.- oder tert.-Butoxy zu verstehen ist; Hydroxy-C₁-C₄-Alkoxy, Phenoxy; gegebenenfalls durch Hydroxy substituiertes C₂-C₆-Alkanoylamino, z.B. Acetylamino, Hydroxyacetylamino oder Propionylamino; Benzoylamino; Amino; gegebenenfalls im Alkylteil z.B. durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, z.B. Methylamino, Ethylamino, N,N-Dimethylamino, N,N-Diethylamino, β-Cyanoethylamino, β-Hydroxyethylamino, N,N-Di-ß-Hydmxyethylamino, β-Sulfoethylamino, γ-Sulfo-n-propylamino, β-Sulfatoethylamino, N-Ethyl-N-(3-Sulfobenzyl)-amino, N-(β-Sulfoethyl)-N-benzylamino; Cyclohexylamino; gegebenenfalls im Phenylteil durch C₁-C₄-Alkyl, C₁-C₄-Alkoxy, Halogen oder Sulfo substituiertes N-Phenylamino oder N-C₁-C₄-Alkyl-N-phenylamino; C₂-C₄-Alkoxycarbonyl, z.B. Methoxy- oder Ethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfo; Sulfomethyl; Carbamoyl; Sulfamoyl; gegebenenfalls im Phenylteil durch Sulfo oder Carboxy substituiertes N-Phenylsulfamoyl oder N-C₁-C₄-Alkyl-N-phenylsulfamoyl; Methyl- oder Ethylsulfonyl; oder gegebenenfalls z.B. durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo.

Bevorzugte Bedeutungen von K₁, K₂ und K₃ sind unabhängig voneinander: Ein Phenyl-oder Naphthylrest, der einen oder mehrere Substituenten aus der Gruppe Sulfo, Hydroxy, C₁-C₄-Alkoxy, Hydroxy-C₁-C₄-Alkoxy, Amino, unsubstituiertes oder durch Hydroxy, Sulfato oder Phenyl substituiertes N-C₁-C₄-Alkyl- oder N,N-Di-C₁-C₄-Alkylamino, Acetylamino, Benzoylamino, C₁-C₄-Alkyl, und unsubstituiertes oder durch C₁-C₄-Alkyl, C₁-C₄-Alkoxy, Halogen, Sulfo, Amino, N-C₁-C₄-Alkyl- oder N,N-Di-C₁-C₄-Alkylamino oder Phenylamino substituiertes Phenylazo oder Naphthylazo trägt; ein unsubstituierter oder durch C₁-C₄-Alkyl, C₁-C₄-Alkoxy, Sulfo oder Halogen substituierter 1-Phenylpyrazol-5-on- oder 1-Phenyl-5-aminopyrazolrest; ein unsubstituierter oder durch C₁-C₄-Alkyl, C₁-C₄-Alkoxy, Sulfo oder Halogen substituierter Indolrest; und ein unsubstituierter oder durch C₁-C₆-Alkyl, Sulfo, Hydroxy oder Phenylamino, welches seinerseits durch C₁-C₄-Alkyl, C₁-C₄-Alkoxy, Sulfo oder Halogen substituiert sein kann, substituierter Naphthylimidazolrest.

K₁, K₂ und K₃ stehen unabhängig voneinander je besonders bevorzugt für einen Phenylrest, der einen oder mehrere Substituenten aus der Gruppe Amino, unsubstituiertes oder durch Hydroxy oder Sulfato substituiertes N-Mono- oder N,N-Di-C₁-C₂-Alkylamino, Benzylamino, Hydroxy und Methoxy trägt, für einen 1- oder 2-Naphthylrest, der einen oder mehrere Substituenten aus der Gruppe Hydroxy, Amino, Acetylamino, Sulfo und Chlor trägt, oder für einen 1-Phenyl-pyrazol-5-on- oder 1-Phenyl-5-aminopyrazolrest, der jeweils einen oder mehrere Substituenten aus der Gruppe Methyl, Methoxy, Sulfo und Chlor trägt.

Stehen einer oder mehrere der Reste R₁-R₈, R₁₁-R₁₄ und R₁₆-R₂₀ für gegebenenfalls durch Halogen substituiertes C₂-C₄-Alkanoylamino, handelt es sich z.B. um Acetylamino, Propionylamino oder Chloracetylamino.

Stehen einer oder mehrere der Reste R₁-R₈, R₁₁-R₁₄ und R₁₆-R₂₀ für eine gegebenenfalls durch Halogen substituierte Gruppe -NHCO-C₂-C₄-Alkylen, handelt es sich z.B. um einen Rest -CH=CH₂ oder um einen Rest -CZ=CH₂, worin Z Halogen, z.B. Chlor oder Brom, bedeutet, und vorzugsweise um einen Rest -CBr=CH₂.

Die Reste R₁-R₈, R₁₁,R₁₂ und R₁₆-R₁₉ bedeuten unabhängig voneinander je bevorzugt Wasserstoff, Methyl, Ethyl, Methoxy, Ethoxy, Chlor oder Sulfo und besonders bevorzugt Wasserstoff, Methyl, Methoxy, Chlor oder Sulfo. Eine bevorzugte Ausführungsform der Erfindung betrifft Verbindungen der Formel (1), worin R₁, R₃, R₅, R₇, R₁₁, R₁₆, und R₁₈ jeweils Wasserstoff und R₂, R₄, R₆, R₈, R₁₂, R₁₇ und R₁₉ unabhängig voneinander je Wasserstoff, Methyl, Methoxy, Chlor oder Sulfo bedeuten. Eine besonders bevorzugte Ausführungsform der Erfindung betrifft Verbindungen der Formel (1), worin R₁-R₈, R₁₁,R₁₂ und R₁₆-R₁₉ jeweils Wasserstoff sind.

Die Reste R₁₃, R₁₄ und R₂₀ bedeuten unabhängig voneinander je bevorzugt Wasserstoff, C₁-C₆-Alkyl, Methoxy, Ethoxy, Chlor oder Sulfo und besonders bevorzugt Wasserstoff oder C₁-C₄-Alkyl.

Bei R₁₅ oder R₂₁ als C₁-C₁₂-Alkyl handelt es sich z.B. um Methyl, Ethyl, n- oder iso-Propyl, n-, iso-, sec.- oder tert.-Butyl oder um geradkettiges oder verzweigtes Pentyl, Hexyl, Heptyl, Octyl, Nonyl, Decyl, Undecyl oder Dodecyl. R₁₅ und R₁₆ stehen unabhängig voneinander je bevorzugt für einen C₁-C₁₀-Alkylrest und besonders bevorzugt für einen C₄-C₈-Alkylrest.

Bei R₁₅ oder R₂₁ als C₅-C₈-Cycloalkyl handelt es sich z.B. um unsubstituiertes oder durch 1 bis 3 Methylgruppen substituiertes Cyclohexyl und bevorzugt um Cyclohexyl.

Die unter der Formel (1) und (2) genannten Brückenglieder X₁, X₂ und X₃ sind so zu verstehen, dass ihr S- bzw. C-Atom jeweils an den linken Phenylrest und das O- bzw. N-Atom an den rechten Phenylrest gebunden sind. X₁, X₂ und X₃ stehen unabhängig voneinander je bevorzugt für ein Brückenglied der Formel -SO₂-O-, -SO₂-N(C₁-C₄-Alkyl)-, -COO- oder -CO-N(C₁-C₄-Alkyl)- und besonders bevorzugt je für die Gruppe -SO₂-O-.

Bedeutet Y₁ oder Y₂ geradkettiges oder verzweigtes C₁-C₆-Alkylen, kann es sich z.B. um Methylen, 1,1- oder 1,2-Ethylen, 1,1-Dimethylmethylen, 1,2- oder 1,3-Propylen oder um geradkettiges oder verzweigtes Butylen, Pentylen oder Hexylen handeln.

Bedeutet Y₁ oder Y₂ C₅-C₈-Alkylen, kann es sich z.B. um unsubstituiertes oder durch 1 bis 3 Methylgruppen substituiertes Cyclohexylen und bevorzugt um Cyclohexylen handeln.

Y₁ und Y₂ bedeuten vorzugsweise eine direkte Bindung, einen geradkettigen oder verzweigten C₁-C₄-Alkylenrest oder Cyclohexylen.

Eine bevorzugte Gruppe von erfindungsgemäss verwendeten Farbstoffen der Formel (1) sind solche, worin K₁ und K₂ unabhängig voneinander je für einen Phenylrest, der einen oder mehrere Substituenten aus der Gruppe Amino, unsubstituiertes oder durch Hydroxy oder Sulfato substituiertes N-Mono- oder N,N-Di-C₁-C₂-Alkylamino, Benzylamino, Hydroxy und Methoxy trägt, für einen 1- oder 2-Naphthylrest, der einen oder mehrere Substituenten aus der Gruppe Hydroxy, Amino, Acetylamino, Sulfo und Chlor trägt, oder für einen 1-Phenyl-pyrazol-5-on- oder 1 -Phenyl-5-aminopyrazolrest, der jeweils einen oder mehrere. Substituenten aus der Gruppe Methyl, Methoxy, Sulfo und Chlor trägt, stehen, R ₁, R₃, R₅ und R₇ je Wasserstoff bedeuten, R₂, R₄, R₆ und R₈ unabhängig voneinander je Wasserstoff, Methyl, Methoxy, Chlor oder Sulfo sind, X₁ und X₂ je die Gruppe -SO₂-O- bedeuten und Y₁ für eine direkte Bindung, geradkettiges oder verzweigtes C₁-C₄-Alkylen oder Cyclohexylen steht.

Besonders bevorzugt als Farbstoffe der Formel (1) sind die Verbindungen der Formel 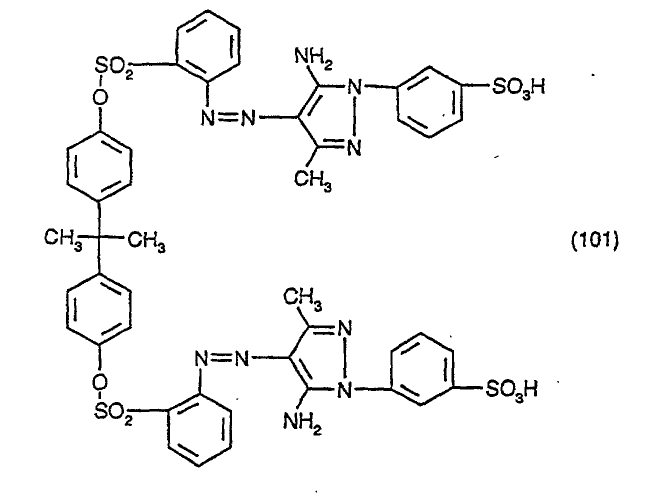 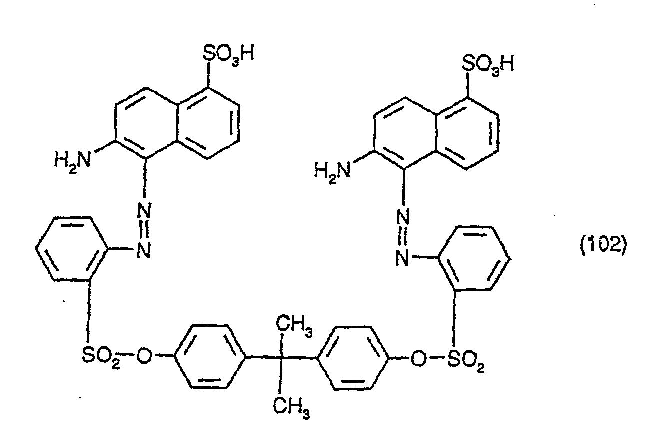 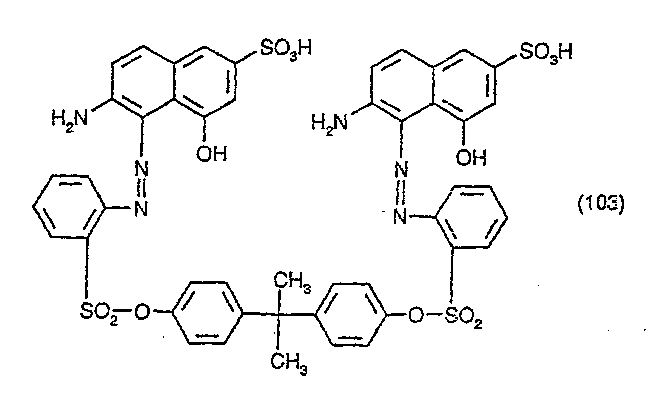 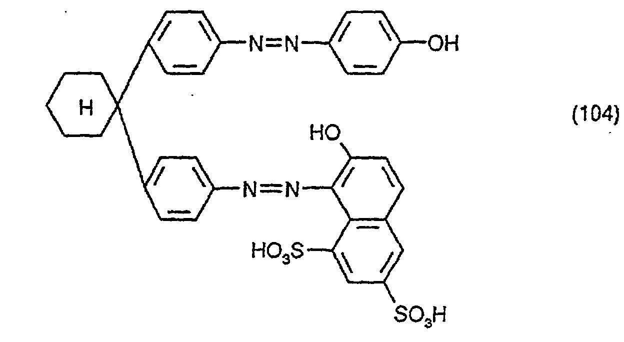 oder

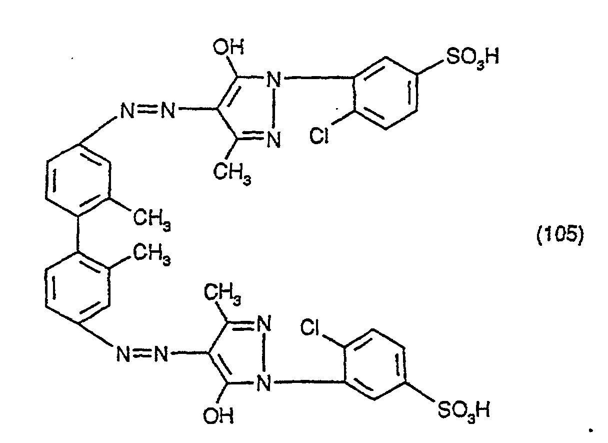

Die Verbindungen der Formel (1) sind an sich bekannt oder können nach an sich bekannten Methoden erhalten werden. Ihre Herstellung kann z.B. erfolgen, indem man eine Verbindung der Formel 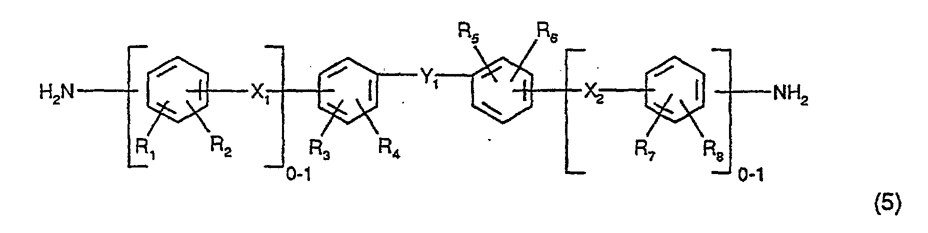 in an sich bekannter Weise, z.B. mit einem Nitrit in einem sauren Medium, tetrazotiert und anschliessend in beliebiger Reihenfolge mit den Kupplungskomponenten der Formeln

K₁ - H (6a)

und

K₂ - H (6b)

kuppelt, worin die Variablen K₁, K₂, R₁-R₈, X₁, X₂ und Y₁ jeweils die zuvor angegebene Bedeutung haben.

Die lediglich zwei Phenylringe enthaltenden Verbindungen der Formel (5), worin die Klammern entfallen, sind an sich bekannt Die vier Phenylringe enthaltenden Verbindungen der Formel (5) können z.B. erhalten werden, indem man eine Verbindung der Formel 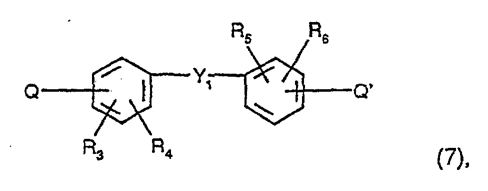 worin R₃-R₆ und Y₁ jeweils die zuvor angegebene Bedeutung haben und Q ein Rest -OH oder -NH(R₉) und Q' ein Rest -OH oder -NH(R₁₀), worin R₉ und R₁₀ jeweils die zuvor angegebene Bedeutung haben, sind, in beliebiger Reihenfolge mit den Verbindungen der Formeln 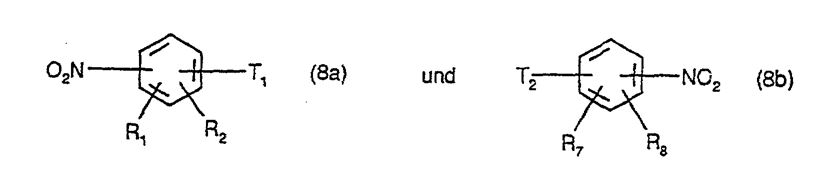 worin die Variablen R₁-R₄ jeweils die zuvor angegebene Bedeutung haben, T₁ und T₂ unabhängig voneinander je eine Gruppe -COHal oder -SO₂Hal bedeuten und Hal Halogen, z.B. Chlor, ist, umsetzt, die erhaltene Dinitroverbindung der Formel 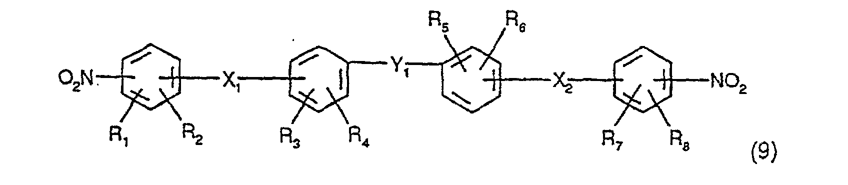 z.B. mittels katalytischer Hydrierung zur entsprechenden Diaminoverbindung reduziert und diese nach ihrer Tetrazotierung in beliebiger Reihenfolge mit den zuvor genannten Kupplungskomponenten der Formeln (6a) und (6b) kuppelt.

Eine bevorzugte Gruppe von erfindungsgemäss verwendeten Farbstoffen der Formel (2) sind solche, worin K₃ für einen Phenylrest, der einen oder mehrere Substituenten aus der Gruppe Amino, unsubstituiertes oder durch Hydroxy oder Sulfato substituiertes N-Mono-oder N,N-Di-C₁-C₂-Alkylamino, Benzylamino, Hydroxy und Methoxy trägt, für einen 1- oder 2-Naphthylrest, der einen oder mehrere Substituenten aus der Gruppe Hydroxy, Amino, Acetylamino, Sulfo und Chlor trägt, oder für einen 1-Phenyl-pyrazol-5-on- oder 1-Phenyl-5-aminopyrazolrest, der jeweils einen oder mehrere Substituenten aus der Gruppe Methyl, Methoxy, Sulfo und Chlor trägt, steht, R₁₁ Wasserstoff bedeutet, R₁₂ Wasserstoff, Methyl, Methoxy, Chlor oder Sulfo ist, R₁₃ und R₁₄ unabhängig voneinander je Wasserstoff, C₁-C₆-Alkyl, Methoxy, Ethoxy, Chlor oder Sulfo sind, R₁₅ C₁-C₁₀-Alkyl, Cyclohexyl oder Chlor bedeutet und X₃ die Gruppe -SO₂-O- darstellt.

Eine besonders bevorzugte Gruppe von erfindungsgemäss verwendeten Farbstoffen der Formel (2) sind solche, worin K3 für einen 1- oder 2-Naphthylrest, der einen oder mehrere Substituenten aus der Gruppe Hydroxy, Amino, Acetylamino, Sulfo und Chlor trägt, oder für einen 1-Phenyl-pyrazol-5-on- oder 1-Phenyl-5-aminopyrazolrest, der jeweils einen oder mehrere Substituenten aus der Gruppe Methyl, Methoxy, Sulfo und Chlor trägt, steht, R₁₁ und R₁₂ je Wasserstoff sind, R₁₃ Wasserstoff oder Methyl und R₁₄ Wasserstoff oder C₁-C₆-Alkyl bedeuten, R₁₅ C₁-C₁₀-Alkyl ist und X₃ die Gruppe -SO₂-O- darstellt.

Die Verbindungen der Formel (2) können hergestellt werden, z.B. indem man eine Verbindung der Formel 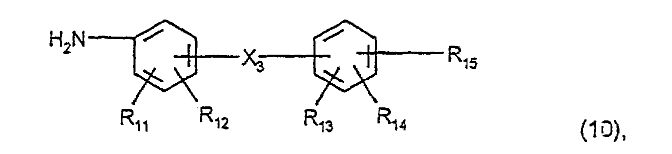 worin R₁₁, R₁₂, R₁₃, R₁₄, R₁₅ und X₃ jeweils die zuvor angegebene Bedeutung haben, diazotiert und mit einer Kupplungskomponente der Formel

K₃-H (6c),

worin K₃ die zuvor angegebene Bedeutung hat, kuppelt. Die Diazotierung der Amine der Formel (5) kann dabei in üblicher Weise, z.B. mit Nitriten wie z.B. Natriumnitrit in einem sauren, z.B. salzsauren, Medium bei Temperaturen von z.B. 0-15°C, erfolgen. Die Kupplung der diazotierten Amine der Formel (10) mit der Kupplungskomponente der Formel (6c) erfolgt vorteilhaft z.B. in einem wässrigen oder wässrig-organischen Medium bei Temperaturen von z.B. 0-30°C und einem neutralen oder leicht sauren pH-Wert. Die Verbindungen der Formel (10) sind an sich bekannt oder können z.B. in Analogie zu den zuvor beschriebenen Verbindungen der Formel (5) hergestellt werden. Die Verbindungen der Formel (6c) sind bekannt oder können nach an sich bekannten Methoden erhalten werden.

Eine bevorzugte Gruppe von erfindungsgemäss verwendeten Farbstoffen der Formel (3) sind solche, worin R₁₆ und R₁₈ je Wasserstoff sind, R₁₇ und R₁₉ unabhängig voneinander je Wasserstoff, Methyl, Methoxy, Chlor oder Sulfo sind und Y₂ geradkettiges oder verzweigtes C₁-C₄-Alkylen oder Cyclohexylen bedeutet

Besonders bevorzugt als Farbstoffe der Formel (3) sind die Verbindungen der Formel 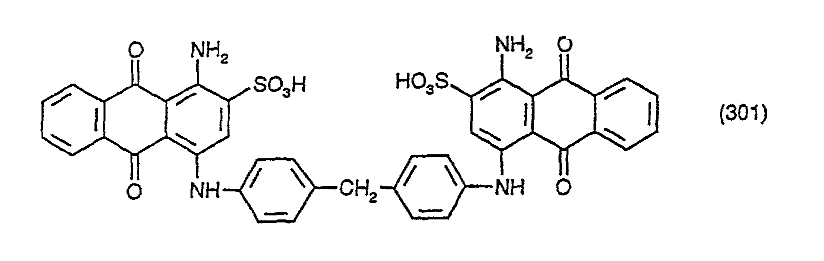 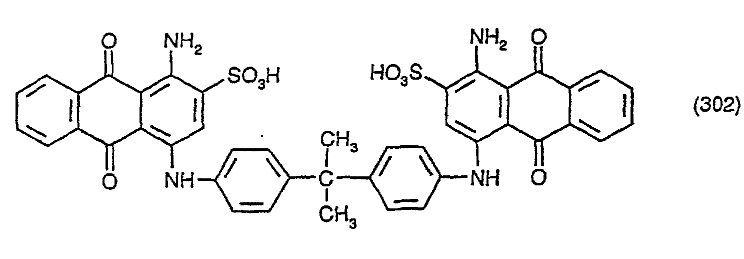 oder

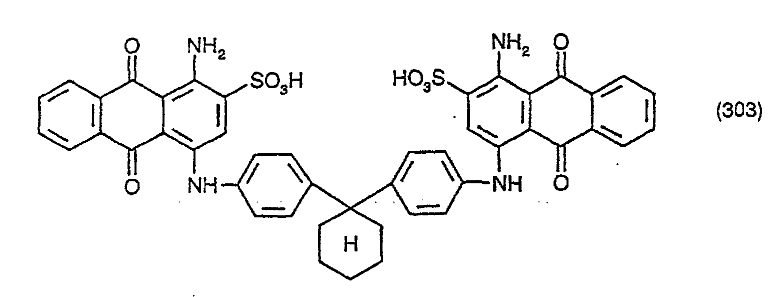

Die Verbindungen der Formel (3) sind an sich bekannt oder können in an sich bekannter weise, z.B. durch Kondensation von in etwa 1 Moläquivalent einer Verbindung der Formel 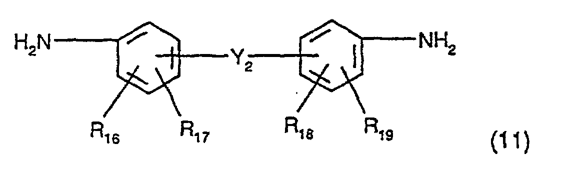 worin R₁₆ bis R₁₉ und Y₂ jeweils die zuvor angegebene Bedeutung haben, mit in etwa 2 Moläquivalenten einer Verbindung der Formel 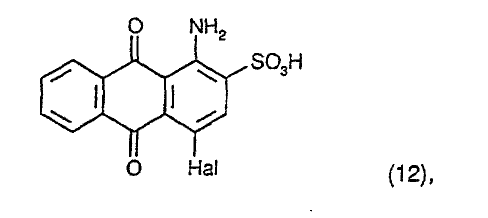 worin Hal Halogen, z.B. Brom bedeutet, in Gegenwart eines Katalysators, z.B. Kupferpulver oder einem Kupfersalz wie Kupferchlorid, in einem organischen Medium bei erhöhter Temperatur, hergestellt werden.

Eine bevorzugte Gruppe von erfindungsgemäss verwendeten Farbstoffen der Formel (4) sind solche, worin R₂₀ Wasserstoff oder C₁-C₆-Alkyl und R₂₁ C₁-C₁₀-Alkyl, Cyclohexyl oder Benzoylamino bedeuten.

Besonders bevorzugt als Farbstoffe der Formel (4) sind die Verbindungen der Formel

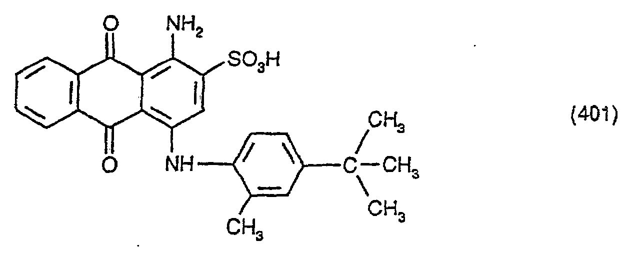

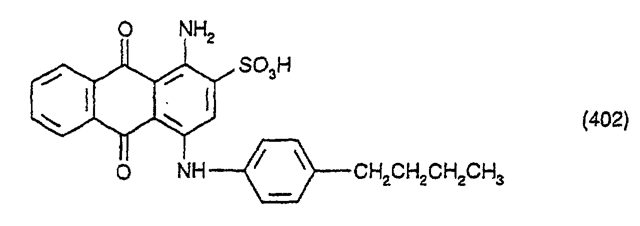

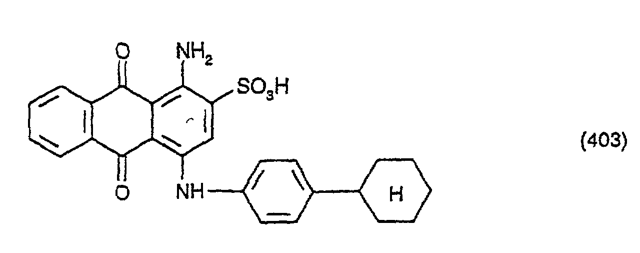

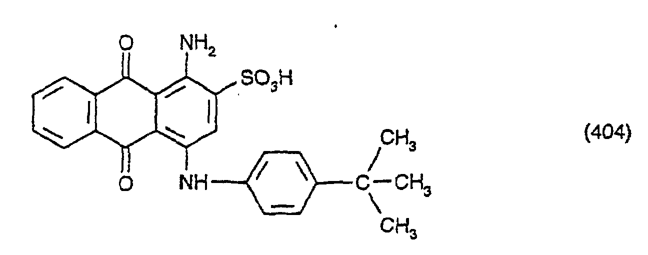

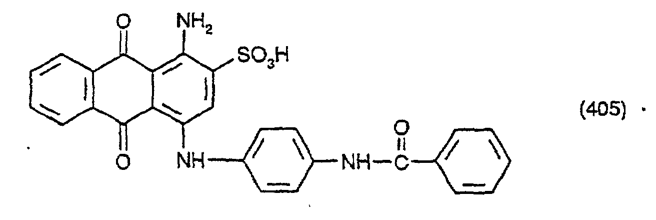

Die Verbindungen der Formel (4) sind bekannt oder können in an sich bekannter Weise, z.B. in Analogie zu den Verbindungen der Formel (3), erhalten werden.

Die in den erfindungsgemäss verwendeten Farbstoffen der Formeln (1), (2), (3) und (4) enthaltenen Sulfogruppen liegen jeweils entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz, vor. Die Farbstoffe der Formeln (1), (2), (3) und (4) und somit auch die Farbstoffmischungen (a) und (b) enthalten in der Regel weitere Zusätze, z.B. Kochsalz oder Dextrin.

Die Farbstoffe der Formeln (1) und (2) liegen in der Farbstoffmischung (a) z.B. im Gewichtsverhältnis von 1:99 bis 99:1, vorzugsweise 25:75 bis 75:25 und besonders bevorzugt 50:50, vor.

Die Farbstoffe der Formeln (3) und (4) liegen in der Farbstoffmischung (b) z.B. im Gewichtsverhältnis von 1:99 bis 99:1, vorzugsweise 25:75 bis 75:25 und besonders bevorzugt 50:50, vor.

Die erfindungsgemässen Farbstoffgemische können z.B. durch Mischung der Einzelfarbstoffe hergestellt werden. Dieser Mischprozess erfolgt z.B. in geeigneten Mühlen, z.B. Kugel- oder Stiftmühlen, sowie in Knetem oder Mixern.

Bevorzugte Ausführungsformen der vorliegenden erfindung betreffen:
(i) Farbstoffgemische bestehend aus 100 Gew.-% einer Farbstoffmischung (a) enthaltend je eine Verbindung der zuvor angegebenen Formeln (1) und (2);
(ii) Farbstoffgemische bestehend aus 100 Gew.-% einer Farbstoffmischung (b) enthaltend je eine Verbindung der zuvor angegebenen Formeln (3) und (4);
(iii) Farbstoffgemische bestehend aus 25 bis 75 Gew.-% einer oder mehrerer Farbstoffmischungen (a) und 75 bis 25 Gew.-% einer oder mehrerer Farbstoffmischungen (b).

Ein weiterer Gegenstand der Erfindung betrifft ein Verfahren zum Färben oder Bedrucken von hydroxylgruppenhaltigen oder stickstoffhaltigen Fasermaterialien mit den erfindungsgemässen Farbstoffgemischen.

Als Fasermaterialien kommen z.B. die natürlichen Cellulosefasern, wie Baumwolle, Leinen, Jute oder Hanf, sowie modifizierte Cellulosefasern wie Zellstoff oder regenerierte Cellulose in Frage. Insbesondere eignen sich die erfindungsgemässen Farbstoffgemische zum Färben oder Bedrucken von natürlichen Polyamidfasermaterialien, z.B. Seide oder Wolle, synthetischen Polyamidfasermaterialien, z.B. Polyamid 6 oder Polyamid 6.6, oder von Woll-und synthetischen Polyamidmischge-weben. Die erfindungsgemässen Farbstoffgemische sind besonders geeignet zum Färben oder Bedrucken von natürlichen Polyamidfasermaterialien, insbesondere von Wolle.

Das genannte Textilfasermaterial kann dabei in den verschiedensten Verarbeitungsformen vorliegen, wie z.B. als Faser, Garn, Flocke, Gewebe oder Gewirke.

Die erfindungsgemässen Farbstoffgemische eignen sich für die üblichen Färbe- und Druckverfahren und lassen sich auf verschiedenste Weise auf das Fasermaterial applizieren und fixieren, insbesondere in Form von wässrigen Farbstofflösungen oder - druckpasten. Sie eignen sich sowohl für das Ausziehverfahren als auch zum Foulard-Färben, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Die erfindungsgemässen Farbstoffgemische sind ebenfalls für das sogenannte Kaltverweilverfahren geeignet, wonach der Farbstoff zusammen mit dem Alkali auf dem Foulard aufgebracht wird und danach durch mehrstündiges Lagern bei Raumtemperatur fixiert wird.

Das Färben von natürlichen und synthetischen Polyamidfasermaterialien, insbesondere von Wolle, erfolgt vorzugsweise nach dem Ausziehverfahren, bei einem pH-Wert von ca. 3 bis 7, insbesondere 3 bis 5, und bei Temperaturen von z.B. 70 bis 110 °C und insbesondere 90 bis 100°C.

Die Färbeflotten oder Druckpasten können ausser Wasser und den Farbstoffen weitere Zusätze, z.B. Salze, Puffersubstanzen, Netzmittel, Antischaummittel, Egalisiermittel oder die Eigenschaften des Textilmaterials beeinflussende Mittel, z.B. Weichmachungsmittel, Zusätze zum Flammfestausrüsten oder schmutz-, wasser- und öl-abweisende Mittel sowie wasserenthärtende Mittel und natürliche oder synthetische Verdicker, z.B. Alginate oder Celluloseether, enthalten.

Die erfindungsgemässen Farbstoffgemische ergeben egale Färbungen und Drucke mit guten Allgemeinechtheiten, insbesondere guter Wasch-, Reib-, Nass-, Nassreib- und Lichtechtheit. Die erfindungsgemässen Farbstoffgemische zeichnen sich ferner durch gleichmässigen Farbaufbau, gutes Aufziehverhalten und hohe Fixiergrade aus. Weiterhin kann bei den erfindungsgemässen Farbstoffgemischen auf die sonst übliche Nachbehandlung der Färbungen und Drucke mit sogenannten Fixiermitteln verzichtet werden.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellung der Verbindungen der Formel (2)

Beispiel 1: Zu einer Lösung aus 75 Teilen 4-tert.-Butylphenol, 5 Teilen Natriumcarbonat, 66,3 Teilen konz. Natriumhydroxidlösung und 200 Teilen Wasser werden bei 80 °C 117 Teile 2-Nitrobenzol-1-sulfochlorid innerhalb von ca. 45 Minuten addiert. Man lässt anschliessend noch 2 Stunden bei dieser Temperatur rühren, kühlt dann auf Raumtemperatur ab, dekantiert die wässrige Phase der entstandenen Emulsion ab und löst den Rückstand in 600 Teilen Toluol. Die organische Phase wird mit Wasser gewaschen, nach der Phasentrennung über Natriumsulfat getrocknet und zur Trockne eingedampft. Das Rohprodukt wird aus Methanol umkristallisiert. Nach dem Trocknen ergeben sich 106 Teile der Verbindung der Formel 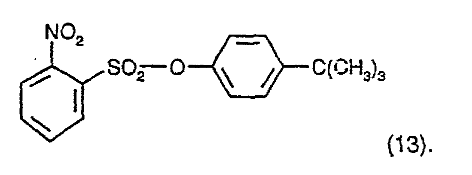 104 Teile der Nitroverbindung der Formel (13) werden katalytisch mit 5% Pd/C in 600 Teilen Tetrahydrofuran hydriert. Nach dem Eindampfen erhält man 92 Teile des Amins der Formel

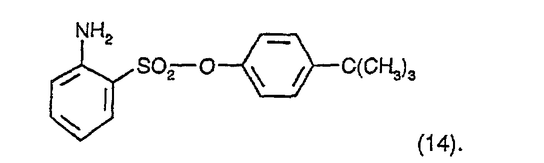

Zu 6,1 Teilen des Amins der Formel (14) gelöst in 30 Teilen Sulfolan werden bei12 °C 6,6 Teile Nitrosylschwefelsäure getropft. Die entstandene Diazolösung wird nach 1 Stunde auf 120 Teile Eis/Wasser ausgetragen und bei ca. 5 °C eine Lösung von 5,3 Teilen 1-(3-Sulfophenyl)-3-methyl-5-aminopyrazol in 20 Teilen Wasser zugetropft. Man stellt mit Natriumhydroxidlösung auf pH 2,5, hält das Reaktionsgemisch noch ca. 1 Stunde bei ca. 5°C und danach ca. 2 Stunden bei Raumtemperatur und stellt dann auf pH 7,5. Der Farbstoff wird mit Natriumchlorid ausgesalzen und abfiltriert. Nach dem Trocknen ergeben sich 11,5 Teile der Verbindung der Formel 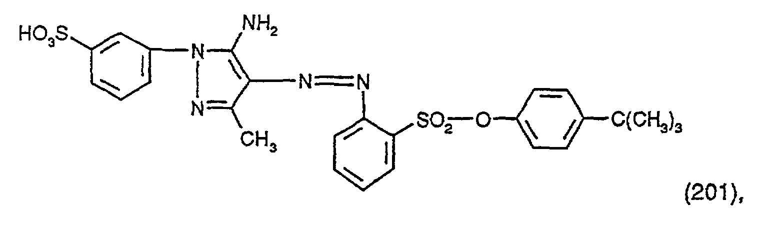 die Wolle in einer gelben Nuance mit guten Allgemeinechtheiten färbt.

Beispiele 2-3: Verfährt man wie im Beispiel 1 beschrieben und verwendet anstelle von 5,3 Teilen 1-(3-Sulfophenyl)-3-methyl-5-aminopyrazol eine äquivalente Menge 2-Aminonaphthalin-5-sulfonsäure oder 2-Amino-8-hydroxynaphhtalin-6-sulfonsäure, werden die Verbindungen der Formeln (202) und (203) erhalten.

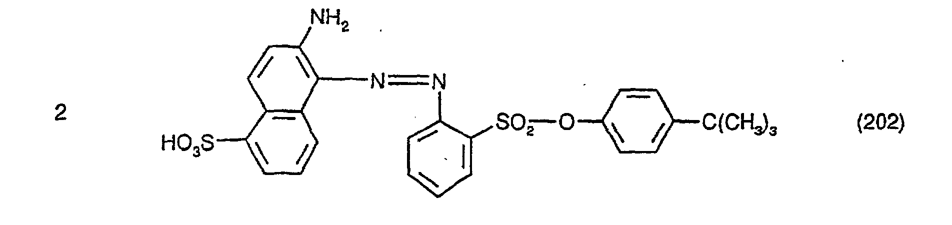

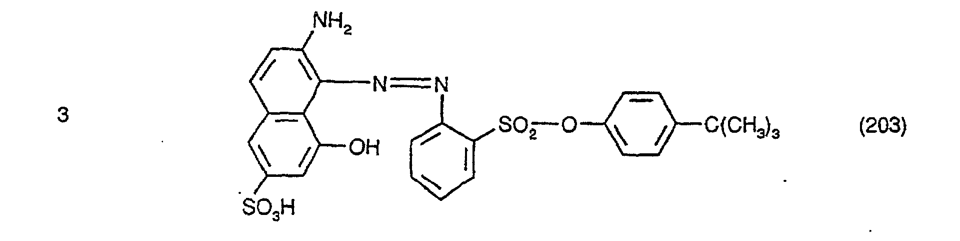

Beispiele 4-25: Analog wie im Beispiel 1 beschrieben lassen sich die folgenden Verbindungen der allgemeinen Formel 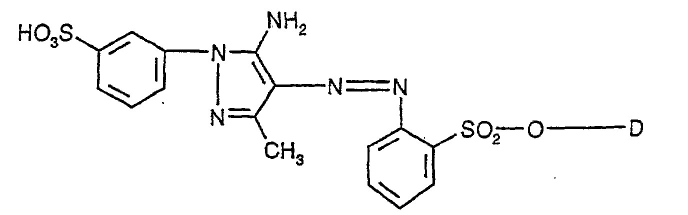 herstellen, worin D die in der Tabelle angegebene Bedeutung hat.

| Beispiel Nr. | D |
|---|---|
| 4 | 2-Methylphenyl |
| 5 | 3-Methylphenyl |
| 6 | 4-Methylphenyl |
| 7 | 4-tert.-Octylphenyl |
| 8 | 2,4,6-Trimethylphenyl |
| 9 | 2-iso-Propylphenyl |
| 10 | 2-tert.-Butylphenyl |
| 11 | 2-Chlorphenyl |
| 12 | 2-sec.-Butylphenyl |
| 13 | 2-tert.-Amylphenyl |
| 14 | 4-tert.-Amylphenyl |
| 15 | 2-tert.-Butyl-4-methylphenyl |
| 16 | 2-tert.-Butyl-5-methylphenyl |
| 17 | 4-tert.-Butyl-2-methylphenyl |
| 18 | 6-tert.-Butyl-2-methylphenyl |
| 19 | 2-tert.-Butyl-4,5-methylphenyl |
| 20 | 2,4-Di-tert.-butylphenyl |
| 21 | 2,6-Di-tert.-butylphenyl |
| 22 | 2,6-Di-sec.-butylphenyl |
| 23 | 2-sec.-Butyl-4-tert.-butylphenyl |
| 24 | 2,4-Di-tert.-butyl-6-methylphenyl |
| 25 | 2,4-Di-tert.-Amylphenyl |

Beispiele 26-47: Analog wie im Beispiel 1 beschrieben lassen sich die folgenden Verbindungen der allgemeinen Formel 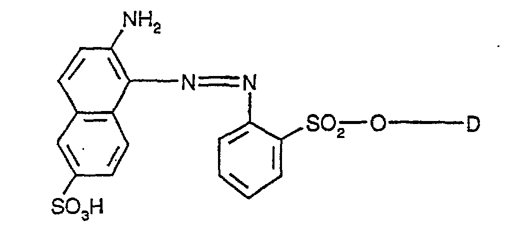 herstellen, worin D die in der Tabelle angegebene Bedeutung hat.

| Beispiel Nr. | D |
|---|---|
| 26 | 2-Methylphenyl |
| 27 | 3-Methylphenyl |
| 28 | 4-Methylphenyl |
| 29 | 4-tert.-Octylphenyl |
| 30 | 2,4,6-Trimethylphenyl |
| 31 | 2-iso-Propylphenyl |
| 32 | 2-tert.-Butylphenyl |
| 33 | 2-Chlorphenyl |
| 34 | 2-sec.-Butylphenyl |
| 35 | 2-tert.-Amylphenyl |
| 36 | 4-tert.-Amylphenyl |
| 37 | 2-tert.-Butyl-4-methylphenyl |
| 38 | 2-tert.-Butyl-5-methylphenyl |
| 39 | 4-tert.-Butyl-2-methylphenyl |
| 40 | 6-tert.-Butyl-2-methylphenyl |
| 41 | 2-tert.-Butyl-4,5-dimethylphenyl |
| 42 | 2,4-Di-tert.-butylphenyl |
| 43 | 2,6-Di-tert.-butylphenyl |
| 44 | 2,6-Di-sec.-butylphenyl |
| 45 | 2-sec.-Butyl-4-tert.-butylphenyl |
| 46 | 2,4-Di-tert.-butyl-6-methylphenyl |
| 47 | 2,4-Di-tert.-Amylphenyl |

Beispiele 48-69: Analog wie im Beispiel 1 beschrieben lassen sich die folgenden Verbindungen der allgemeinen Formel 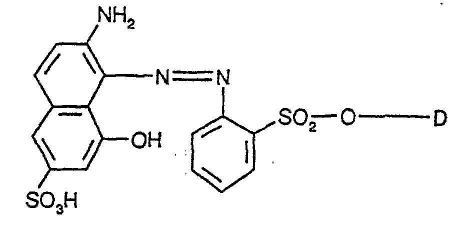 herstellen, worin D die in der Tabelle angegebene Bedeutung hat.

| Beispiel Nr. | D |
|---|---|
| 48 | 2-Methylphenyl |
| 49 | 3-Methylphenyl |
| 50 | 4-Methylphenyl |
| 51 | 4-tert.-Octylphenyl |
| 52 | 2,4,6-Trimethylphenyl |
| 53 | 2-iso-Propylphenyl |
| 54 | 2-tert.-Butylphenyl |
| 55 | 2-Chlorphenyl |
| 56 | 2-sec.-Butylphenyl |
| 57 | 2-tert.-Amylphenyl |
| 58 | 4-tert.-Amylphenyl |
| 59 | 2-tert.-Butyl-4-methylphenyl |
| 60 | 2-tert.-Butyl-5-methylphenyl |
| 61 | 4-tert.-Butyl-2-methylphenyl |
| 62 | 6-tert.-Butyl-2-methylphenyl |
| 63 | 2-tert.-Butyl-4,5-dimethylphenyl |
| 64 | 2,4-Di-tert.-butylphenyl |
| 65 | 2,6-Di-tert.-butylphenyl |
| 66 | 2,6-Di-sec.-butylphenyl |
| 67 | 2-sec.-Butyl-4-tert.-butylphenyl |
| 68 | 2,4-Di-tert.-butyl-6-methylphenyl |
| 69 | 2,4-Di-tert.-Amylphenyl |

Beispiel 69a: Zu 6,1 Teilen des Amins der Formel (14) gemäss Beispiel 1 gelöst in 30 Teilen Sulfolan werden bei 12°C 6,6 Teile Nitrosylschwefelsäure getropft. Die entstandene Diazolösung wird nach 1 Stunde auf 120 Teile Eis/Wasser ausgetragen und bei ca. 5°C eine Lösung von 5,1 Teilen 1-(3-Sulfophenyl)-3-methylpyrazol-5-on in 20 Teilen Wasser zugetropft Man stellt mit Natriumhydroxidlösung auf pH 2,5, hält das Reaktionsgemisch noch ca. 1 Stunde bei ca. 5°C und lässt über Nacht bei Raumtemperatur rühren. Der Farbstoff wird pH 7,5 mit Natriumchlorid ausgesalzen und abfiltriert. Nach dem Trocknen ergeben sich 11,5 Teile der Verbindung der Formel 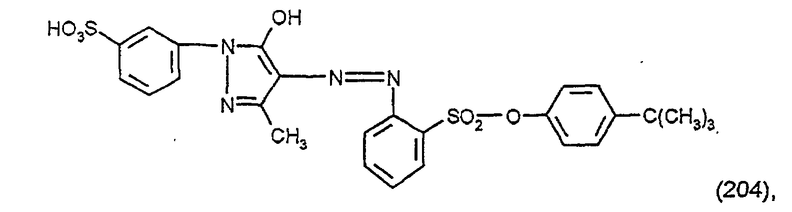 die Wolle in einer gelben Nuance mit guten Allgemeinechtheiten färbt.

Beispiele 69b-69d: Analog wie im Beispiel 69a beschrieben lassen sich die folgenden Verbindungen herstellen, die Wolle jeweils in einer gelben Nuance mit guten Allgemeinechtheiten färben.

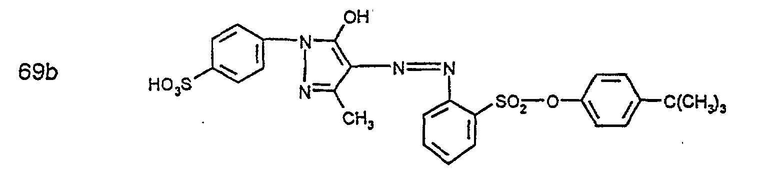

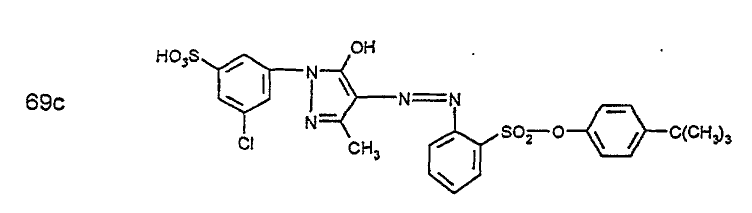

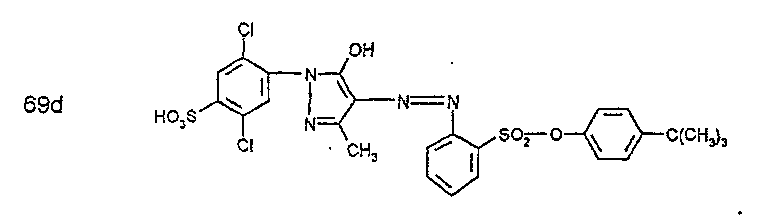

### Herstellung der Farbstoffgemische

Beispiel 70: 25 Teile des Farbstoffes der in der Beschreibung angegebenen Formel (101) und 18 Teile des Farbstoffes gemäss Beispiel 1 werden in einem Mörser homogen vermischt. Es ergeben sich 43 Teile eines Farbstoffgemisches, welches Wolle in einer gelben Nuance mit guten Allgemeinechtheiten färbt

Beispiele 71-79: Analog wie im Beispiel 70 beschrieben lassen sich die folgenden Farbstoffgemische herstellen:

| Beispiel Nr. | Farbstoffgemisch | Nuance auf Wolle |
|---|---|---|
| 71 | 25 Teile Farbstoff der Formel (102) | orange |
| | 15 Teile Farbstoff gemäss Beispiel 2 | |
| 72 | 25 Teile Fabstoff der Formel (103) | rot |
| | 18 Teile Farbstoff gemäss Beispiel 3 | |
| 73 | 42 Teile Farbstoff der Formel (101) | gelb |
| | 30 Teile Farbstoff gemäss Beispiel 7 | |
| 74 | 42 Teile Farbstoff der Formel (102) | orange |
| | 36 Teile Farbstoff gemäss Beispiel 29 | |
| 75 | 42 Teile Farbstoff der Formel (103) | rot |
| | 34 Teile Farbstoff gemäss Beispiel 51 | |
| 76 | 26 Teile Farbstoff der Formel (301) | blau |
| | 60 Teile Farbstoff der Formel (401) | |
| 77 | 42 Teile Farbstoff der Formel (301) | blau |
| | 26 Teile Farbstoff der Formel (401) | |
| 78 | 14,75 Teile Farbstoff der Formel (102) | braun |
| | 8,90 Teile Farbstoff gemäss Beispiel 2 | |
| | 16,90 Teile Farbstoff der Formel (103) | |
| | 12,15 Teile Farbstoff gemäss Beispiel 3 | |
| | 14,30 Teile Farbstoff der Formel (301) | |
| | 33,00 Teile Farbstoff der Formel (401) | |
| 79 | 13,21 Teile Farbstoff der Formel (102) | braun |
| | 11,32 Teile Farbstoff gemäss Beispiel 29 | |
| | 16,68 Teile Farbstoff der Formel (103) | |
| | 13,51 Teile Farbstoff gemäss Beispiel 51 | |
| | 27,97 Teile Farbstoff der Formel (301) | |
| | 17,31 Teile Farbstoff der Formel (401) | |

### Färbebeispiele

Beispiel 80: 100 Teile eines Wollgewebes werden in einem wässrigen Bad, welches 4000 Teile Wasser, 5 Teile Natriumsulfat, 8 Teile Natriumacetat und 8 Teile 80%ige Essigsäure enthält, während 5 Minuten bei 30 °C und pH 4,5 vorbehandelt. Nach Zugabe einer wässrigen Lösung enthaltend 1,1 Teile der Farbstoffmischung gemäss Beispiel 70 wird die Färbeflotte noch 5 Minuten bei 30 °C gehalten und anschliessend mit einer Aufheizrate von 1°C pro Minute auf 100°C erhitzt. Man färbt 60 Minuten bei dieser Temperatur, kühlt dann auf 50°C ab und lässt die Färbeflotte ab. Das in einer gelben Nuance gefärbte Wollgewebe wird in üblicher Weise gespült und getrocknet. Die erhaltene Färbung ist faseregal und weist gute Allgemeinechtheiten auf.

Beispiele 81-89: Verfährt man wie im Beispiel 80 angegeben und verwendet anstelle der Farbstoffmischung gemäss Beispiel 70 die in der Tabelle angegebenen Farbstoffmischungen in den dort bezeichneten Mengen, werden ebenfalls sehr faseregale Färbungen mit guten Allgemeinechtheiten erhalten.

| Beispiel Nr. | Farbstoffmischung | Nuance auf Wolle |
|---|---|---|
| 81 | 1,1 Teile Farbstoffmischung gemäss Beispiel 71 | orange |
| 82 | 1,3 Teile Farbstoffmischung gemäss Beispiel 72 | rot |
| 83 | 2,1 Teile Farbstoffmischung gemäss Beispiel 76 | blau |
| 84 | 1,0 Teile Farbstoffmischung gemäss Beispiel 73 | gelb |
| 85 | 1,2 Teile Farbstoffmischung gemäss Beispiel 77 | orange |
| 86 | 1,2 Teile Farbstoffmischung gemäss Beispiel 75 | rot |
| 87 | 1,9 Teile Farbstoffmischung gemäss Beispiel 77 | blau |
| 88 | 1,5 Teile Farbstoffmischung gemäss Beispiel 78 | braun |
| 89 | 1,6 Teile Farbstoffmischung gemäss Beispiel 79 | braun |

## Patentansprüche

1. Farbstoffgemische bestehend aus
(a) 0-100 Gew.-% mindestens einer Farbstoffmischung enthaltend eine Verbindung der Formel 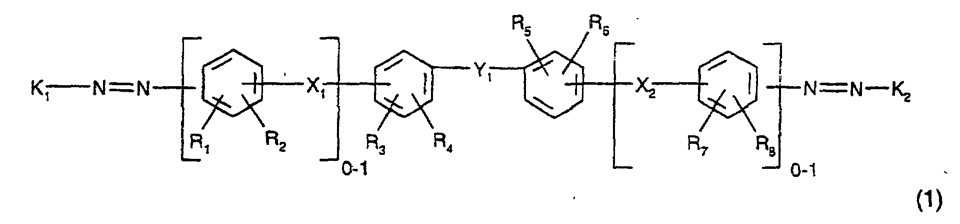 worin K₁ und K₂ unabhängig voneinander je den Rest einer Kupplungskomponente der Benzol- oder Naphthalinreihe oder der heterocyclischen Reihe bedeuten,
X₁ und X₂ unabhängig voneinander je ein Brückenglied der Formel -SO₂-O-, -SO₂-N(R₉)-, -COO- oder -CO-N(R₁₀)- sind, wobei R₉ und R₁₀ unabhängig voneinander je Wasserstoff oder C₁-C₄-Alkyl bedeuten,
R₁, R₂, R₃, R₄, R₅, R₆, R₇ und R₈ unabhängig voneinander je für Wasserstoff, C₁-C₆-Alkyl, C₁-C₄-Alkoxy, Halogen, Sulfo, unsubstituiertes oder durch Halogen substituiertes C₂-C₄-Alkanoylamino oder eine unsubstituierte oder durch Halogen substituierte Gruppe -NHCO-C₂-C₄-Alkylen stehen, und
Y₁ eine direkte Bindung, geradkettiges oder verzweigtes C₁-C₆-Alkylen oder C₅-C₈-Cycloalkylen bedeutet,
und eine Verbindung der Formel 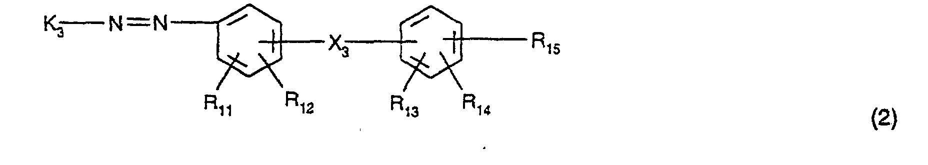 worin K₃ unabhängig die zuvor für K₁ angegebene Bedeutung hat, X₃ unabhängig die zuvor für X₁ angegebene Bedeutung hat, R₁₁, R₁₂, R₁₃ und R₁₄ unabhängig voneinander je die zuvor für R₁ angegebene Bedeutung haben und R₁₅ C₁-C₁₂-Alkyl, C₅-C₈-Cycloalkyl oder Halogen ist, und
(b) 0-100 Gew.-% mindestens einer Farbstoffmischung enthaltend eine Verbindung der Formel 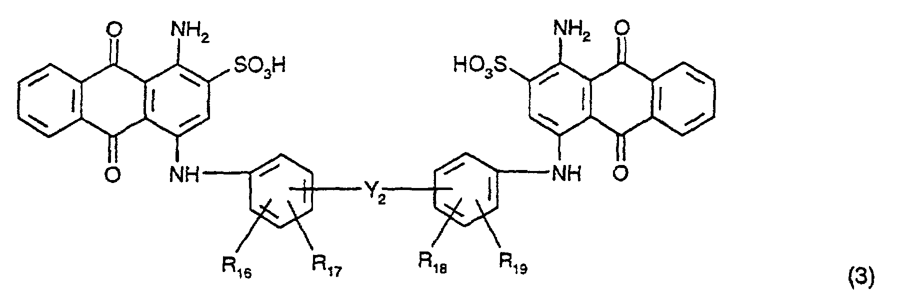 worin R₁₆, R₁₇, R₁₈ und R₁₉ unabhängig voneinander je für Wasserstoff, C₁-C₆-Alkyl, C₁-C₄-Alkoxy, Halogen, unsubstituiertes oder durch Halogen substituiertes C₂-C₄-Alkanoylamino oder eine unsubstituierte oder durch Halogen substituierte Gruppe -NHCO-C₂-C₄-Alkylen stehen und Y₂ eine direkte Bindung, geradkettiges oder verzweigtes C₁-C₆-Alkylen oder C₅-C₈-Cycloalkylen bedeutet, und eine Verbindung der Formel 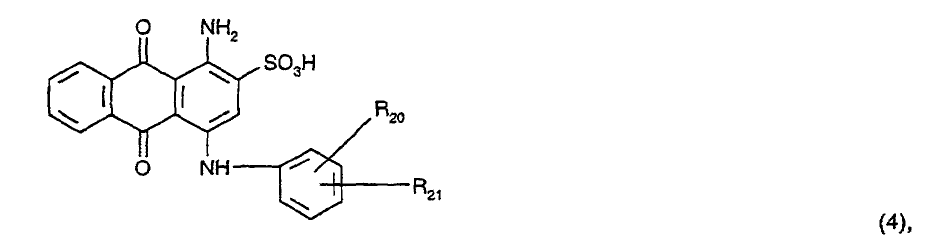 worin R₂₀ die zuvor für R₁₆ angegebene Bedeutung hat und R₂₁ C₁-C₁₂-Alkyl, C₅-C₈-Cycloalkyl, C₂-C₄-Alkanoylamino oder Benzoylamino ist,
mit der Massgabe, dass die Summe von (a) und (b) 100 Gew.-% beträgt.

2. Farbstoffgemische gemäss Anspruch 1, dadurch gekennzeichnet, dass K₁ und K₂ in Formel (1) unabhängig voneinander je für einen Phenylrest, der einen oder mehrere Substituenten aus der Gruppe Amino, unsubstituiertes oder durch Hydroxy oder Sulfato substituiertes N-Mono- oder N,N-Di-C₁-C₂-Alkylamino, Benzylamino, Hydroxy und Methoxy trägt, für einen 1- oder 2-Naphthylrest, der einen oder mehrere Substituenten aus der Gruppe Hydroxy, Amino, Acetylamino, Sulfo und Chlor trägt, oder für einen 1-Phenyl-pyrazol-5-on- oder 1-Phenyl-5-aminopyrazolrest, der jeweils einen oder mehrere Substituenten aus der Gruppe Methyl, Methoxy, Sulfo und Chlor trägt, stehen, R₁, R₃, R₅ und R₇ je Wasserstoff bedeuten, R₂, R₄, R₆ und R₈ unabhängig voneinander je Wasserstoff, Methyl, Methoxy, Chlor oder Sulfo sind, X₁ und X₂ je die Gruppe -SO₂-O- bedeuten und Y₁ für eine direkte Bindung, geradkettiges oder verzweigtes C₁-C₄-Alkylen oder Cyclohexylen steht.

3. Farbstoffgemische gemäss Anspruch 1 oder 2, dadurch gekennzeichnet, dass K₃ in Formel (2) für einen Phenylrest, der einen oder mehrere Substituenten aus der Gruppe Amino, unsubstituiertes oder durch Hydroxy oder Sulfato substituiertes N-Mono- oder N,N-Di-C₁-C₂-Alkylamino, Benzylamino, Hydroxy und Methoxy trägt, für einen 1- oder 2-Naphthylrest, der einen oder mehrere Substituenten aus der Gruppe Hydroxy, Amino, Acetylamino, Sulfo und Chlor trägt, oder für einen 1 -Phenyl-pyrazol-5-on- oder 1-Phenyl-5-aminopyrazolrest, der jeweils einen oder mehrere Substituenten aus der Gruppe Methyl, Methoxy, Sulfo und Chlor trägt, steht, R₁₁ Wasserstoff bedeutet, R₁₂ Wasserstoff, Methyl, Methoxy, Chlor oder Sulfo ist, R₁₃ und R₁₄ unabhängig voneinander je Wasserstoff, C₁-C₆-Alkyl, Methoxy, Ethoxy, Chlor oder Sulfo sind, R₁₅ C₁-C₁₀-Alkyl, Cyclohexyl oder Chlor bedeutet und X₃ die Gruppe -SO₂-O- darstellt.

4. Farbstoffgemische gemäss einem der Ansprüche 1 bis 3, dadurch gekennzeichnet, dass K₃ in Formel (2) für einen 1- oder 2-Naphthylrest, der einen oder mehrere Substituenten aus der Gruppe Hydroxy, Amino, Acetylamino, Sulfo und Chlor trägt, oder für einen 1-Phenylpyrazol-5-on- oder 1-Phenyl-5-aminopyrazolrest, der jeweils einen oder mehrere Substituenten aus der Gruppe Methyl, Methoxy, Sulfo und Chlor trägt, steht, R₁₁ und R₁₂ je Wasserstoff sind, R₁₃ Wasserstoff oder Methyl und R₁₄ Wasserstoff oder C₁-C₆-Alkyl bedeuten, R₁₅ C₁-C₁₀-Alkyl ist und X₃ die Gruppe -SO₂-O- darstellt.

5. Farbstoffgemische gemäss einem der Ansprüche 1 bis 4, dadurch gekennzeichnet, dass R₁₆ und R₁₈ in Formel (3) je Wasserstoff bedeuten, R₁₇ und R₁₉ unabhängig voneinander je Wasserstoff, Methyl, Methoxy, Chlor oder Sulfo sind und Y₂ geradkettiges oder verzweigtes C₁-C₄-Alkylen oder Cyclohexylen bedeutet.

6. Farbstoffgemische gemäss einem der Ansprüche 1 bis 5, dadurch gekennzeichnet, dass R₂₀ in Formel (4) Wasserstoff oder C₁-C₆-Alkyl und R₂₁ C₁-C₁₀-Alkyl, Cyclohexyl oder Benzoylamino bedeuten.

7. Farbstoffgemische gemäss einem der Ansprüche 1 bis 6, dadurch gekennzeichnet, dass sie aus einer Farbstoffmischung (a) enthaltend je eine Verbindung der Formeln (1) und (2) im Gewichtsverhältnis von 25:75 bis 75:25 bestehen.

8. Farbstoffgemische gemäss einem der Ansprüche 1 bis 6, dadurch gekennzeichnet, dass sie aus einer Farbstoffmischung (b) enthaltend je eine Verbindung der Formeln (3) und (4) im Gewichtsverhältnis von 25:75 bis 75:25 bestehen.

9. Farbstoffgemische gemäss einem der Ansprüche 1 bis 6, dadurch gekennzeichnet, dass sie aus 25 bis 75 Gew.-% einer oder mehrerer Farbstoffmischungen (a) und 75 bis 25 Gew.-% einer oder mehrerer Farbstoffmischungen (b) bestehen.

10. Verfahren zum Färben oder Bedrucken von hydroxylgruppenhaltigen oder stickstoffhaltigen Fasermaterialien, dadurch gekennzeichnet, dass man diese Fasermaterialien in einer wässrigen Lösung mit einem Farbstoffgemisch gemäss einem der Ansprüche 1 bis 9 in Kontakt bringt.

11. Verfahren gemäss Anspruch 10 zum Färben oder Bedrucken von natürlichen oder synthetischen Polyamidfasermaterialien, besonders von Wolle.

12. Verwendung von Farbstoffgemischen gemäss einem der Ansprüche 1 bis 19 zum Färben oder Bedrucken von natürlichen oder synthetischen Polyamidfasermaterialien, besonders von Wolle.

## Claims

1. A dye mixture consisting of
(a) 0-100 % by weight of at least one dye mixture comprising a compound of the formula 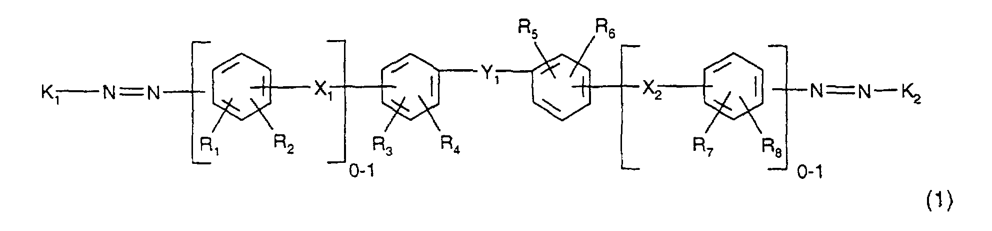 in which K₁ and K₂ independently of one another are each the radical of a coupling component of the benzene or naphthalene series or of the heterocyclic series,
X₁ and X₂ independently of one another are each a bridging member of the formula -SO₂-O-, -SO₂-N(R₉)-, -COO- or -CO-N(R₁₀)- in which R₉ and R₁₀ independently of one another are each hydrogen or C₁-C₄alkyl,
R₁, R₂, R₃, R₄, R₅, R₆, R₇ and R₈, independently of one another are each hydrogen, C₁-C₆alkyl, C₁-C₄alkoxy, halogen, sulfo, unsubstituted or halogen-substituted C₂-C₄-alkanoylamino or an unsubstituted or halogen-substituted group -NHCO-C₂-C₄alkylene and
Y₁ is a direct bond, straight-chain or branched C₁-C₆alkylene or C₅-C₈cycloalkylene, and a compound of the formula 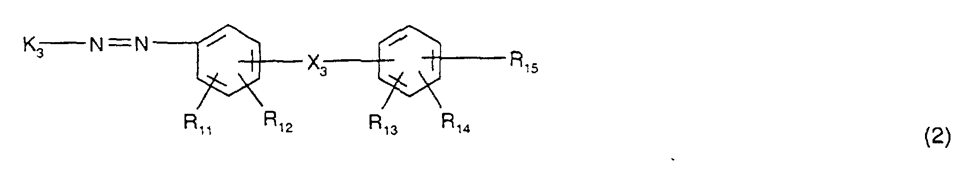 in which K₃ independently is as defined above for K₁; X₃ independently is as defined above for X₁; R₁₁, R₁₂, R₁₃ and R₁₄ independently of one another are each as defined above for R₁, and R₁₅ is C₁-C₁₂alkyl, C₅-C₈cycloalkyl or halogen, and
(b) 0-100 % by weight of at least one dye mixture comprising a compound of the formula 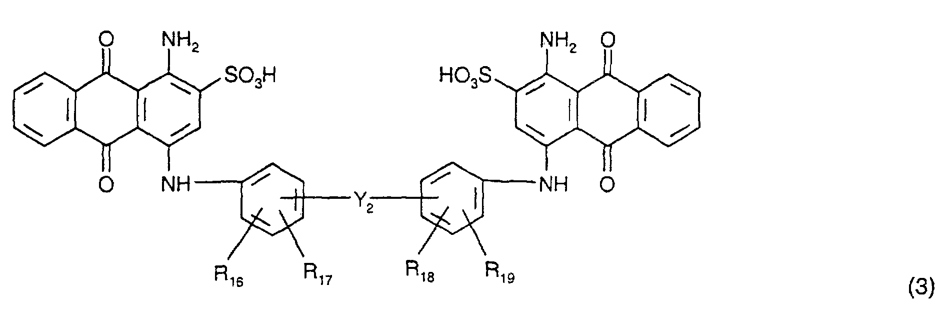 in which R₁₆, R₁₇, R₁₈ and R₁₉ independently of one another are each hydrogen, C₁-C₆alkyl, C₁-C₄alkoxy, halogen, unsubstituted or halogen-substituted C₂-C₄alkanoylamino or an unsubstituted or halogen-substituted group NHCO-C₂-C₄alkylene
and Y₂ is a direct bond, straight-chain or branched C₁-C₆alkylene or C₅-C₈cycloalkylene, and a compound of the formula 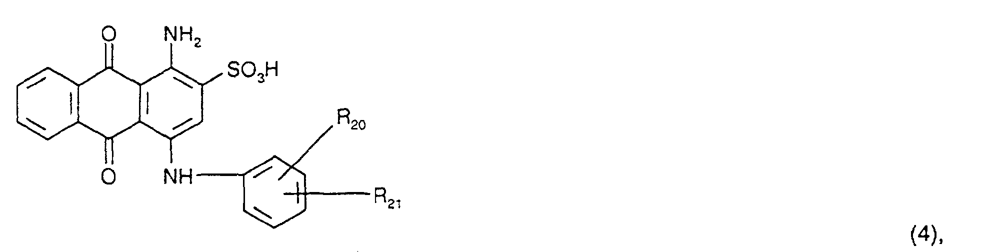 in which R₂₀ is as defined above for R₁₆, and R₂₁ is C₁-C₁₂alkyl, C₅-C₈cycloalkyl, C₂-C₄alkanoylamino or benzoylamino,
with the proviso that the sum of (a) and (b) is 100 % by weight.

2. A dye mixture according to claim 1, wherein K₁ and K₂ in formula (1) independently of one another are each a phenyl radical which carries one or more substituents from the group consisting of amino, unsubstituted or hydroxyl- or sulfato-substituted N-mono- or N,N-di-C₁-C₂alkylamino, benzylamino, hydroxyl and methoxy, are each a 1- or 2-naphthyl radical which carries one or more substituents from the group consisting of hydroxyl, amino, acetylamino, sulfo and chlorine, or are each a 1-phenylpyrazol-5-one or 1-phenyl-5-aminopyrazole radical which in each case carries one or more substituents from the group consisting of methyl, methoxy, sulfo and chlorine, R₁, R₃, R₅ and R₇ are each hydrogen, R₂, R₄, R₆ and R₈ independently of one another are each hydrogen, methyl, methoxy, chlorine or sulfo, X₁ and X₂ are each the group -SO₂-O- and Y₁ is a direct bond, straight-chain or branched C₁-C₄alkylene or cyclohexylene.

3. A dye mixture according to claim 1 or 2, wherein K₃ in formula (2) is a phenyl radical which carries one or more substituents from the group consisting of amino, unsubstituted or hydroxyl- or sulfato-substituted N-mono- or N,N-di-C₁-C₂alkylamino, benzylamino, hydroxyl and methoxy, is a 1- or 2-naphthyl radical which carries one or more substituents from the group consisting of hydroxyl, amino, acetylamino, sulfo and chlorine, or is a 1-phenylpyrazol-5-one or 1-phenyl-5-aminopyrazole radical each of which carries one or more substituents from the group consisting of methyl, methoxy, sulfo and chlorine, R₁₁ is hydrogen, R₁₂ is hydrogen, methyl, methoxy, chlorine or sulfo, R₁₃ and R₁₄ independently of one another are each hydrogen, C₁-C₆alkyl, methoxy, ethoxy, chlorine or sulfo, R₁₅ is C₁-C₁₀alkyl, cyclohexyl or chlorine and X₃ is the group -SO₂-O-.

4. A dye mixture according to any one of claims 1 to 3, wherein K₃ in formula (2) is a 1- or 2-naphthyl radical which carries one or more substituents from the group consisting of hydroxyl, amino, acetylamino, sulfo and chlorine, or is a 1-phenylpyrazol-5-one or 1-phenyl-5-aminopyrazole radical each of which carries one or more substituents from the group consisting of methyl, methoxy, sulfo and chlorine, R₁₁ and R₁₂ are each hydrogen, R₁₃ is hydrogen or methyl and R₁₄ is hydrogen or C₁-C₆alkyl, R₁₅ is C₁-C₁₀alkyl and X₃ is the group -SO₂-O-.

5. A dye mixture according to any one of claims 1 to 4, wherein R₁₆ and R₁₈ in formula (3) are each hydrogen, R₁₇ and R₁₉ independently of one another are each hydrogen, methyl, methoxy, chlorine or sulfo and Y₂ is straight-chain or branched C₁-C₄alkylene or cyclohexylene.

6. A dye mixture according to any one of claims 1 to 5, wherein R₂₀ in formula (4) is hydrogen or C₁-C₆alkyl and R₂₁ is C₁-C₁₀alkyl, cyclohexyl or benzoylamino.

7. A dye mixture according to any one of claims 1 to 6, which consists of a dye mixture (a) containing one compound each of the formulae (1) and (2) in a weight ratio of from 25:75 to 75:25.

8. A dye mixture according to any one of claims 1 to 6, which consists of a dye mixture (b) containing one compound each of the formulae (3) and (4) in a weight ratio of from 25:75 to 75:25.

9. A dye mixture according to any one of claims 1 to 6, which consists of from 25 to 75 % by weight of one or more dye mixtures (a) and from 75 to 25 % by weight of one or more dye mixtures (b).

10. A process for dyeing or printing hydroxyl-containing or nitrogen-containing fibre materials, which comprises bringing these fibre materials in an aqueous solution into contact with a dye mixture according to any one of claims 1 to 9.

11. A process according to claim 10 for the dyeing or printing of natural or synthetic polyamide fibre materials, especially wool.

12. The use of a dye mixture according to any one of claims 1 to 9 for dyeing or printing natural or synthetic polyamide fibre materials, especially wool.

## Revendications

1. Mélanges de colorants constitués
(a) de 0 à 100 % en masse d'au moins un mélange de colorants contenant un composé de formule 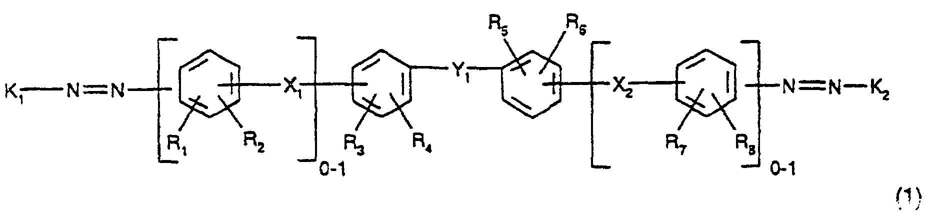 où
K₁ et K₂ représentent chacun, indépendamment l'un de l'autre, le reste d'un composant de copulation de la série du benzène ou du naphtalène ou de la série hétérocyclique,
X₁ et X₂ représentent chacun, indépendamment l'un de l'autre, un élément de pontage de formule -SO₂-O-, -SO₂-N(R₉)-, -COO- ou -CO-N(R₁₀)-, R₉ et R₁₀ représentant chacun, indépendamment l'un de l'autre, un atome d'hydrogène ou un groupe alkyle en C₁-C₄,
R₁, R₂, R₃, R₄, R₅, R₆, R₇ et R₈ représentent chacun, indépendamment les uns des autres, un atome d'hydrogène, des groupes alkyle en C₁-C₆, alkoxy en C₁-C₄, halogène, sulfo, (alcanoyl en C₂-C₄)-amino non substitué ou substitué par un substituant halogène, ou un groupe -NHCO-alkylène en C₂-C₄ non substitué ou substitué par un substituant halogène, et
Y₁ représente une liaison directe ou des groupes alkylène en C₁-C₆ à chaîne droite ou ramifiée ou cycloalkylène en C₅-C₈,
et un composé de formule 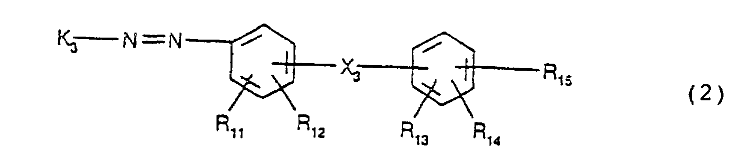 où
K₃ possède, indépendamment, la signification donnée auparavant pour K₁
X₃ possède, indépendamment, la signification donnée auparavant pour X₁,
R₁₁, R₁₂, R₁₃ et R₁₄ possèdent chacun, indépendamment l'un de l'autre, la signification donnée auparavant pour R₁ et
R₁₅ représente des groupes alkyle en C₁-C₁₂, cycloalkyle en C₅-C₈ ou halogène, et
b) de 0 à 100 % en masse d'au moins un mélange de colorants contenant un composé de formule 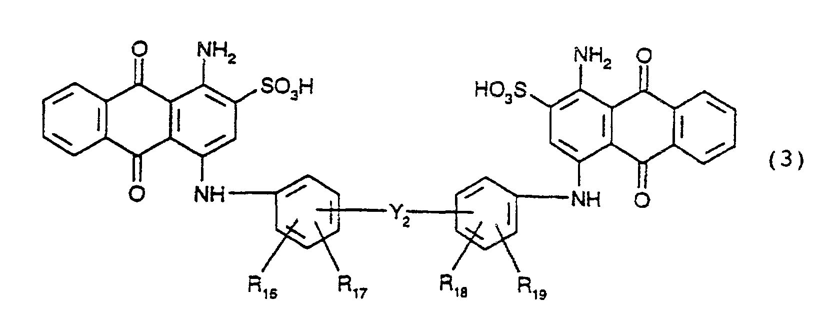 où
R₁₆, R₁₇, R₁₈ et R₁₉ représentent chacun, indépendamment l'un de l'autre, un atome d'hydrogène, des groupes alkyle en C₁-C₆, alkoxy en C₁-C₄, halogène, (alcanoyl en C₂-C₄)amino ou un groupe -NHCO-alkylène en C₂-C₄ non substitué ou substitué par un substituant halogène et
Y₂ représente une liaison directe, des groupes alkylène en C₁-C₆ à chaîne droite ou ramifiée ou cycloalkylène en C₅-C₈,
et un composé de formule 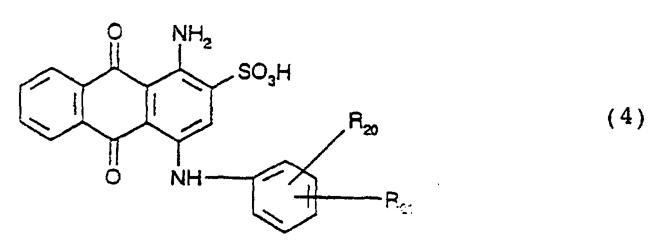 où
R₂₀ possède la signification donnée auparavant pour R₁₆ et
R₂₁ représente des groupes alkyle en C₁-C₁₂, cycloalkyle en C₅-C₈, (alcanoyl en C₂-C₄)amino ou benzoylamino,
à condition que la somme de (a) et (b) soit égale à 100 % en masse.

2. Mélanges de colorants selon la revendication 1, caractérisés en ce que K₁ et K₂ à la formule (1) représentent chacun, indépendamment l'un de l'autre, un reste phényle portant un ou plusieurs substituants pris dans le groupe de substituants amino, N-mono- ou N,N-di-(alkyl en C₁-C₂)amino non substitué ou substitué par des substituants hydroxy ou sulfato, benzylamino, hydroxy et méthoxy, un reste 1-naphtyle ou 2-naphtyle portant un ou plusieurs substituants pris dans le groupe de substituants hydroxy, amino, acétylamino, sulfo et chloro, ou un reste 1-phényl-pyrazol-5-one ou 1-phényl-5-aminopyrazole, chacun portant un ou plusieurs substituants pris dans le groupe des substituants méthyle, méthoxy, sulfo et chlore, R₁, R₃, R₅ et R₇ représentent chacun un atome d'hydrogène, R₂, R₄, R₆ et R₈ représentent chacun, indépendamment l'un de l'autre, un atome d'hydrogène, des groupes méthyle, méthoxy, chlore ou sulfo, X₁ et X₂ représentent chacun le groupe -SO₂-O- et Y₁ représente une liaison directe, un groupe alkylène en C₁-C₄ à chaîne droite ou ramifiée ou cyclohexylène.

3. Mélanges de colorants selon la revendication 1 ou 2, caractérisé en ce que K₃ à la formule (2) représente un reste phényle portant un ou plusieurs substituants pris dans le groupe des substituants amino, N-mono- et N,N-di-(alkyl en C₁-C₂)amino non substitué ou substitué par des substituants hydroxy ou sulfato, benzylamino, hydroxy et méthoxy, un reste 1-naphtyle ou 2-naphtyle portant un ou plusieurs substituants pris dans le groupe des substituants hydroxy, amino, acétylamino, sulfo et chlore, ou représente un reste 1-phényl-pyrazol-5-one ou 1-phényl-5-aminopyrazole, chacun portant un ou plusieurs substituants pris dans le groupe des substituants méthyle, méthoxy, sulfo et chlore, R₁₁ représente un atome d'hydrogène, R₁₂ représente un atome d'hydrogène, des groupes méthyle, méthoxy, chlore ou sulfo, R₁₃ et R₁₄ représentent chacun, indépendamment l'un de l'autre, un atome d'hydrogène, des groupes alkyle en C₁-C₆, méthoxy, éthoxy, chlore ou sulfo, R₁₅ représente un groupe alkyle en C₁-C₁₀, cyclohexyle ou chlore et X₃ représente le groupe -SO₂-O-.

4. Mélanges de colorants selon l'une des revendications 1 à 3, caractérisés en ce que K₃ représente un reste 1-naphtyle ou 2-naphtyle portant un ou plusieurs substituants pris dans le groupe des substituants hydroxy, amino, acétylamino, sulfo et chlore, ou représente un reste 1-phényl-pyrazol-5-one ou 1-phényl-5-aminopyrazole, chacun portant un ou plusieurs substituants pris dans le groupe des substituants méthyle, méthoxy, sulfo et chlore, R₁₁ et R₁₂ représentent chacun un atome d'hydrogène, R₁₃ représente un atome d'hydrogène ou un groupe méthyle et R₁₄ représente un atome d'hydrogène ou un groupe alkyle en C₁-C₆, R₁₅ représente un groupe alkyle en C₁-C₁₀ et X₃ représente le groupe -SO₂-O-.

5. Mélanges de colorants selon l'une des revendications 1 à 4, caractérisés en ce que R₁₆ et R₁₈ à la formule (3) représentent chacun un atome d'hydrogène, R₁₇ et R₁₉ représentent chacun, indépendamment l'un de l'autre, un atome d'hydrogène, des groupes méthyle, méthoxy, chlore ou sulfo et Y₂ représente un groupe alkylène en C₁-C₄ à chaîne droite ou ramifiée ou cyclohexylène.

6. Mélanges de colorants selon l'une des revendications 1 à 5, caractérisés en ce que R₂₀ représente un atome d'hydrogène ou un groupe alkyle en C₁-C₆ et R₂₁ représente des groupes alkyle en C₁-C₁₀, cyclohexyle ou benzoylamino.

7. Mélanges de colorants selon l'une des revendications 1 à 6, caractérisés en ce qu'ils sont constitués par un mélange de colorants (a) contenant à chaque fois un composé de formule (1) et (2) dans un rapport pondéral de 25:75 à 75:25.

8. Mélanges de colorants selon l'une des revendications 1 à 6, caractérisés en ce qu'ils sont constitués par un mélange de colorants (b) contenant à chaque fois un composé de formule (3) et (4) dans un rapport pondéral de 25:75 à 75:25.

9. Mélanges de colorants selon l'une des revendications 1 à 6, caractérisés en ce qu'ils sont constitués de 25 à 75 % en masse d'un ou plusieurs mélanges de colorants (a) et de 75 à 25 % en masse d'un ou plusieurs mélanges de colorants (b).

10. Procédé pour la teinture ou l'impression de matières fibreuses azotées ou contenant des groupes hydroxyle, caractérisé en ce qu'on met en contact ces matières fibreuses dans une solution aqueuse avec un colorant selon l'une des revendications 1 à 9.

11. Procédé selon la revendication 10 pour la teinture ou l'impression de matières fibreuses polyamides naturelles ou synthétiques, notamment de la laine.

12. Utilisation de mélanges de colorants selon l'une des revendications 1 à 9 pour la teinture ou l'impression de matières fibreuses polyamides naturelles ou synthétiques, notamment de la laine.
